Europäisches Patentamt

European Patent Office

Office européen des brevets

(11) Publication number: **0 462 360 A1**

# EUROPEAN PATENT APPLICATION

(21) Application number: 91103509.5

(51) Int. Cl.5: **G01C 19/72**

(22) Date of filing: 07.03.91

(30) Priority: 15.05.90 US 523722

(43) Date of publication of application:
27.12.91 Bulletin 91/52

(84) Designated Contracting States:
DE FR GB IT NL

(71) Applicant: ANDREW A.G.
Postfach 51, Bachliwis 2B
CH-8184 Bachenbulach, Zürich(CH)

(72) Inventor: Dyott, Richard B.
9832 S. Minnick Avenue
Oak Lawn, Illinois 60453(US)

(74) Representative: Patentanwälte Grünecker,
Kinkeldey, Stockmair & Partner
Maximilianstrasse 58
W-8000 München 22(DE)

(54) **Compound fiber-optic gyroscope using frequency discrimination.**

(57) A compound high rate/low rate fiber-optic gyroscope comprising first and second optical fiber coils; an optical signal source operating at a known frequency for supplying an optical signal to the optical fiber coils; first and second couplers for coupling the optical signal from the source to both ends of each of the first and second coils so that the signal is propagated in opposite directions around each of the coils, the first and second coils being different so that the phase differences between the counter-propagating signals in the respective coils vary linearly with the rate of rotation of the coils in different rotation rate ranges in the two different coils; first and second modulators coupled respectively to the first and second coils and operating at different modulation frequencies for modulating the counter-propagating signals in each of the coils; a frequency-discriminating circuit for receiving the optical signals from both ends of both of the coils and producing first and second output signals representing the phase differences between the counter-propagating signals in the respective coils; and a third coupler between the source and the discriminating circuit for coupling the signals from the source to the first and second couplers, and for coupling the signals from the first and second couplers to the discriminating circuit.

Fig. 1

## Field Of Invention

The present invention relates generally to fiber-optic gyroscopes and, more particularly, to compound fiber-optic gyroscopes which utilize multiple sensing coils to expand the linear dynamic range of the gyroscope.

## Background Of The Invention

Compound fiber-optic gyroscopes which utilize multiple sensing coils to expand the linear dynamic range have been previously proposed. For example, one such compound gyroscope is described in Burns et al. U.S. Patent No. 4,573,797 for "Analog Fiber Gyro With Extended Linear Range." The previously proposed compound gyroscopes, however, offer little advantage over two separate gyroscopes, except for the sharing of a common optical signal source. Also, because of the number of couplers required in those gyroscopes, the signal-to-noise ratio at the photodetector is relatively low, and the cost of the gyroscope is relatively high.

## Summary of The Invention

It is a primary object of the present invention to provide an improved compound fiber-optic gyroscope which produces an improved signal-to-noise ratio at a reduced cost.

It is another important object of this invention to provide an improved compound fiber-optic gyroscope which requires only a single photodetector and only three directional couplers, thereby significantly reducing the number of components required in such a compound gyroscope, and thus reducing the cost of the gyroscope.

Other objects and advantages of the invention will become apparent upon reading the following detailed description and upon reference to the accompany drawings.

## Brief Description Of The Drawings

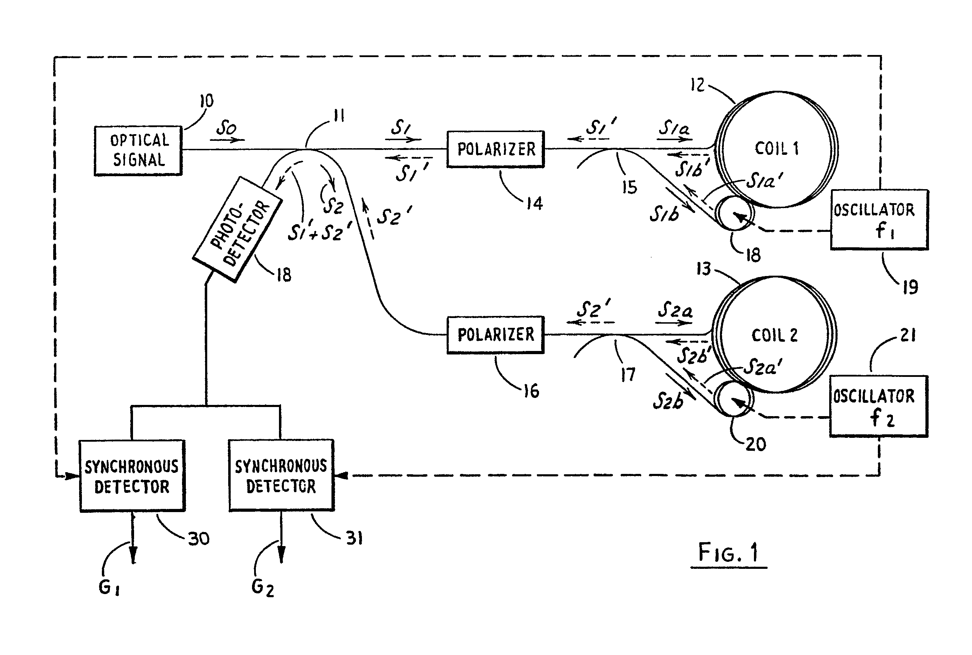

In the drawings, the single figure is a schematic diagram of a compound fiber-optio gyroscope embodying the present invention.

## Description Of The Preferred Embodiments

While the invention is susceptible to various modifications and alternative forms, a specific embodiment thereof has been shown by way of example in the drawings and will be described in detail herein. It should be understood, however, that it is not intended to limit the invention to the particular form disclosed, but on the contrary, the intention is to cover all modifications, equivalents, and alternatives falling within the spirit and scope of the invention as defined by the appended claims.

Turning now to the drawing, an optical signal source 10 generates an optical signal $S_0$ which is split into components $S_1$ and $S_7$ by a 3-dB directional coupler 11 and launched into both ends of a pair of optical-fiber sensing coils 12 and 13. The source 10 is preferably a source of coherent light, such as a laser, although a source of non-coherent light may be used in conjunction with a polarizer. The input signal $S_1$ for the first sensing coil 12 is passed through a polarizer 14 and a 3-dB directional coupler 15 which splits the optical signal $S_1$ into components $S_{1a}$ and $S_{1b}$; the latter components are then launched into opposite ends of the first sensing coil 12. Similarly, the input signal $S_2$ to the second sensing coil 13 is passed through a polarizer 16 and a 3-dB directional coupler 17 to split the signal $S_2$ into components $S_{2a}$ and $S_{2b}$ which are launched into opposite ends of the second sensing coil 13.

The preferred optical signal source 10 is a solid-state, single-longitudinal-mode laser such as a superluminescent diode which produces a relatively high-power, broad-band beam of coherent light. The optical fiber which receives the output signal $S_0$ from the source 10 is preferably a self-aligning, single-mode, polarization-maintaining optical fiber of the type described in Dyott U.S. Patent No. 4,669,814 for "Single Mode, Single Polarization optical Fiber with Accessible Guiding Region And Method Of Forming Directional Coupler Using Same." As described in the Dyott patent, single-mode propagation has the advantage of providing relatively constant phase velocity and group velocity as the light propagates through the fiber, and also provides well defined field patterns for coupling purposes. The polarization-maintaining properties of the preferred fiber are provided by an elliptical core in the fiber, so that the loss of signal strength due to removal of improperly polarized light in the polarizers 14 and 16 is kept to a minimum.

The self-aligning property of the preferred fiber is particularly useful in coupling the fiber to the laser 10, as described in detail in Dyott U.S. Patent No. 4,784,454 for "Optical Fiber and Laser Interface Device." This self-aligning feature of the fiber is also useful in forming the directional couplers and the sensing coils 12 and 13, as described in more detail in Dyott U.S. Patent No. 4,697,876 for "Fiber-Optic Rotation Sensor" and in the aforementioned Dyott U.S. Patent No. 4,669,814. If it is desired to minimize losses in the sensing coils, however, the polarization-maintaining (but non-self-aligning) fiber described in Dyott U.S. Patent No. 4,307,938 for "Dielectric Waveguide with Elongate Cross-Section" may be used to form the coils.

The polarizers 14 and 16 are preferably indium-clad fiber-optic polarizers of the type described in Dyott U.S. Patent No. 4,712,866 for "Indium-Clad Fiber-Optic Polarizer." This type of polarizer uses a coating of indium on a flat external surface of the fiber orthogonal to the internal plane of the desired polarization so that light waves having undesired polarizations are attenuated by the indium coating. The indium coating is coupled to the evanescent field of the guiding region of the fiber.

The optical signal $S_0$ produced by the source 10 is divided into the two equal components $S_1$ and $S_2$ by the 3-dB directional coupler 11, i.e., the directional coupler 11 functions as a 50-50 beam splitter. The signal component $S_1$ is passed through the polarizer 14 and then sub-divided by the directional coupler 15 into the two equal components $S_{1a}$ and $S_{1b}$. The signal component $S_{1a}$ is propagated through the coil 12 in a clockwise ("CW") direction, while the signal compound $S_{1b}$ is propagated through the coil 12 in a counterclockwise ("CCW") direction.

The signal component $S_2$ from the directional coupler 11 is passed through the polarizer 16 and then sub-divided by the directional coupler 17 into two equal components $S_{2a}$ and $S_{2b}$. The signal component $S_{2a}$ is propagated through the coil 13 in the CW direction, while the signal component $S_{2b}$ is propagated through the coil 13 in the CCW direction.

As the signal components $S_{1a}$ and $S_{1b}$ emerge from the coil 12, 50% of both signal components are combined in the directional coupler 15 to form a signal $S_1'$ which is returned as signal $S_1'$ through the polarizer 14 to the directional coupler 11. The other 50% of the two signal components $S_{1a}$ and $S_{1b}$ is dissipated at a non-reflecting termination of the coupler 15. At the coupler 11, half of the recombined signal $S_1'$ is coupled into a photodetector 22 which converts the optical signals into analogous electrical signals.

Whenever the sensing coil 12 is rotated, the well known "Sagnac" effect produces a phase difference between the two counter-propagating signals $S_{1a}$ and $S_{1b}$, and this phase difference is used to measure the magnitude and direction of the rate of angular movement of the coil 12. The manner in which the phase difference is used to measure the rotation rate of the sensing coil 12 is thoroughly described in the literature. Briefly summarized, angular movement of the coil 12 shifts the phase of the two counter-propagating signals in opposite directions. This relative phase shift between the two signals is known as the "Sagnac" phase shift and is defined in radians by the equation:

$$\phi = 4\, \Omega A / c^2$$

where A is the total area enclosed by the optical-fiber coil, i.e., the area enclosed by one turn multiplied by the number of turns in the coil, $\Omega$ is the gyro rotation rate in radians/second, is the optical radian frequency in radians/second, and c is the free space velocity of light. All these parameters are constant except for the rotation rate $\Omega$, and thus the phase shift $\phi$ can be used to determine the rotation rate $\Omega$.

The Sagnac phase shift is detected as a change in the amplitudes of the optical signals $S_1'$ and $S_2'$ propagated from the directional couplers 15 and 17 to the directional coupler 11 and then on to the photodetector 22. Of course, only half of the two signals $S_1'$ and $S_2'$ passes through the coupler 11 to the photoeleotor 22.

For any given coil, i.e., a coil having a given diameter and a given number of turns, the amplitude of the optical signal received by the photodetector 22 varies linearly with the rate of rotation of the coil throughout a certain range of rotation rates, and then becomes non-linear as the rotation rate continues to increase. The reason for the use of the two coils 12 and 13 is to extend the dynamic range of the gyroscope by producing two optical signals $S_1'$ and $S_2'$ whose amplitudes vary linearly with the rotation rate over two different, overlapping ranges of rotation rates. The combination of these two linear ranges is then the total linear dynamic range of the compound gyroscope.

The two different linear ranges of the coils 12 and 13 are achieved by selecting the number of turns and/or the diameter of each coil so that the phase differences between the counter-propagating signals in the respective coils vary linearly with the rotation rate in different rotation rate ranges. The coils are preferably designed so that their respective linear ranges overlap each other, whereby the ultimate output of the compound gyroscope varies uniformly over its entire operating range.

In order to improve the sensitivity of both portions of the compound gyroscope, a pair of phase modulators 18 and 20 are coupled to the fibers of the two coils 12 and 13, respectively, near one end of each coil. The modulators 18 and 20 are driven by a-c. electrical signals of a fixed frequencies $f_1$ and $f_2$ from respective oscillators 19 and 21, so that the modulating frequencies are precisely known. Phase modulators of this type are well know and are typically implemented by winding a length of the optical fiber around a piezoelectric disc driven by the a-c. electrical signal of known frequency.

Each of the phase modulators 18 and 20 introduces a non-reciprocal phase shift into the CW and CCW signals in the respective coils 12 and 13. The resultant relative phase shift between the CW and CCW signals, which is present even in the absence of any angular motion of the coils, introduces a bias into the output of each coil so that the maximum sensitivity of each coil, i.e., the linear response region, is in a preselected range of rotation rates.

The preferred modulator is a PZT modulator which utilizes a piezoelectric disc having the optical fiber wound around the outer surface of the disc. A pair of electrodes are attached to opposite sides of the disc at the center of the disc, and these electrodes are connected to the electronic oscillator which supplies the electrical modulation signal at the desired frequency. The mechanical oscillation induced in the piezoelectric disc by the a-c. drive signal from the electronic oscillator causes periodic stretching of the fiber wound around the disc. Optical pulses which pass through the fiber while that fiber is stretched undergo a phase shift relative to optical pluses which pass through that same portion of the fiber while it is relaxed. The electronic oscillator may be a simple Colpitts-type oscillator.

In accordance with one aspect of the present invention, the phase modulators 18 and 20 coupled to the respective sensing coils 12 and 13 are operated at different frequencies so that the signals in the two coils are modulated at different frequencies. Frequency-discriminating synchronous detectors 30 and 31 then receive the electrical analogs of the output signals $S_1'$ and $S_2'$ from the two coils and use frequency discrimination to separate the two signals $S_1'$ and $S_2'$. The synchronous detectors 30 and 31 produce output signals G1 and G2 representing the respective phase differences between the counter-propagating signals in the two coils 12 and 13.

The frequency discriminators may take the form of superheterodynes which mix the electrical output signal from the photodetector with a fixed-frequency signal from one of the oscillators. As shown in the drawing, the synchronous detectors 30 and 31 preferably receive fixed-frequency signals from the same oscillators 19 and 21 that supply the a-c. modulating signals to the coils 12 and 13. This ensures that the modulators 18 and 20 and the synchronous detectors 30 and 31 always receive signals at exactly the same frequencies $f_1$ and $f_2$, which in turn ensures reliable discrimination between the two signals $S_1'$ and $S_2'$ from the two sensing coils.

By modulating the signals in the two sensing coils at different frequencies, and then using frequency discrimination to separate the output signals from the two coils, this invention permits the compound gyro to be made with only a single photodetector and only three couplers. That is, a single directional coupler connects the optical signal source to the two sensing coils, and also connects the two sensing coils to the single photodetector. The use of a single coupler for these functions avoids the signal strength loss that is inherent in the use of multiple couplers. Consequently, the signal-to-noise ratio in the ultimate output signal from the gyro is significantly increased.

The present invention also enables the entire optical portion of the compound gyroscope to be made from only two optical fibers. Thus, a first fiber receives the signal $S_0$ from the source 10, forms half of the directional coupler 11 and also forms the polarizer 14, the entire directional coupler 15, the sensing coil 12 and the fiber portion of the modulator 18. A second fiber forms the other half of the coupler 11, the polarizer 16, the coupler 17, the sensing coil 12, the fiber portion of the modulator 20, and conducts the signals $S_1'$ and $S_2'$ from the coupler 11 to the photodetector 22. Alternatively, of course, the polarizers, couplers, coils and modulators can all be pre-formed as separate components and then spliced together.

## Claims

1. A compound high rate/low rate fiber-optic gyroscope comprising:

first and second optical fiber coils;

an optical signal source operating at a known frequency for supplying an optical signal to said optical fiber coils;

first and second couplers for coupling said optical signal from said source to both ends of each of said first and second coils so that said signal is propagated in opposite directions around each of said coils, said first and second coils being different so that the phase differences between the counter-propagating signals in the respective coils vary linearly with the rate of rotation of the coils in different rotation rate ranges in the two different coils;

first and second modulation means coupled respectively to said first and second coils and operating at different modulation frequencies for modulating the counter-propagating signals in each of said coils;

frequency discrimination means for receiving the optical signals from both ends of both of said coils and producing first and second output signals representing the phase differences between the counter-propagating signals in the respective coils; and

a third coupler between said source and said discrimination means for coupling the signals from said source to said first and second couplers, and for coupling said signals from said first and second couplers to said discriminating means.

2. The compound high rate/low rate fiber-optic gyroscope of claim 1 which includes a photodetector connected between said third coupler and said frequency discrimination means for converting the optical signals from said first and second couplers to electrical signals representing the phase differences between the counter-propagating signals in each of said first and second coils.

3. The compound high rate/low rate fiber-optic gyroscope of claim 1 which includes first and second polarisers connected between said third coupler and each of said first and second couplers.

4. The compound high rate/low rate fiber-optic gyroscope of claim 1 wherein said frequency discrimination means includes first and second synchronous detectors for comparing the signals from said first and second couplers with the modulation frequencies for said first and second coils.

5. The compound high rate/low rate fiber-optic gyroscope of claim 1 wherein said first and second modulation means include first and second sources of a-c. electrical signals of different fixed frequencies, and wherein said frequency discrimination means is also connected to said first and second sources of a-c. electrical signals of different fixed frequencies.

6. The compound high rate/low rate fiber-optic gyroscope of claim 1 wherein said first coupler, said first coil, the optical portion of said first modulation means, and half of said third coupler are formed by a single optical fiber which is connected to said optical signal source.

7. The compound high rate/low rate fiber-optic gyroscope of claim 2 wherein said second coupler, said second coil, the optical portion of said second modulation means, and half of said third coupler are formed by a single optical fiber which is connected to said photodetector.

8. The compound high rate/low rate fiber-optic gyroscope of claim 1 wherein said optical signal source is a coherent light source.

FIG. 1

EP 0 462 360 A1

European
Patent Office

EUROPEAN SEARCH
REPORT

Application Number

EP 91 10 3509

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 573 797 (BURNS et al.)<br>* Figure 1; abstract; column 3, line 56 - column 5, line 36 *<br>– – – | 1-5,7,8 | G 01 C 19/72 |
| Y | PATENT ABSTRACTS OF JAPAN, vol. 11, no. 137 (P-572)[2584], 2nd May 1987;<br>& JP-A-61 277 013 (SUMITOMO) 08-12-1986<br>– – – | 1-5,7,8 | |
| A | DE-A-3 235 401 (LICENTIA)<br>* Figures 1,2; claims 1,4,8,10 *<br>– – – | 1,6 | |
| A | US-A-4 874 244 (KERSEY)<br>* Figure 1; abstract *<br>– – – – – | 1,6 | |

**TECHNICAL FIELDS SEARCHED (Int. Cl.5)**

G 01 C

The present search report has been drawn up for all claims

| Place of search | Date of completion of search | Examiner |
|---|---|---|
| The Hague | 06 September 91 | KOLBE W.H. |